# EUROPEAN PATENT SPECIFICATION

(11) **EP 4 627 703 B1**
(45) Date of publication and mention of the grant of the patent: **04.11.2026**
(21) Application number: 23809341.3
(22) Date of filing: 17.11.2023
(51) Int. Cl.: H02K 15/03

(54) **MAGNET LOADING DEVICE, APPARATUS FOR INSERTING MAGNETS IN A LAMINATION STACK, AND CORRESPONDING METHODS**
MAGNETLADEVORRICHTUNG, VORRICHTUNG ZUM EINSETZEN VON MAGNETEN IN EINEN LAMINIERUNGSSTAPEL UND ZUGEHÖRIGE VERFAHREN
DISPOSITIF DE CHARGE D'AIMANT, APPAREIL POUR INSÉRER DES AIMANTS DANS UN EMPILEMENT DE TÔLES, ET PROCÉDÉS CORRESPONDANTS

(30) Priority: 01.12.2022 IT 202200024714
(43) Date of publication of application: 08.10.2025
(73) Proprietor: I.M.A. Industria Macchine Automatiche S.p.A, 40064 Ozzano dell'Emilia (BO) (IT)
(72) Inventor: AZZOLINI, Davide, 40064 OZZANO DELL'EMILIA (BO) (IT)
(74) Representative: Petraz, Gilberto Luigi
(86) International application number: PCT/IT2023/050256
(87) International publication number: WO 2024/116214

(56) References cited:
- JP-A- 2020 120 538
- JP-B2- 5 283 561
- US-A1- 2021 242 757

## Description

### FIELD OF THE INVENTION

The present invention concerns a magnet loading device, an apparatus for inserting magnets in a lamination stack for a rotor, a method for loading magnets in an accommodating body and a method for inserting magnets in a lamination stack, in particular in a lamination stack for the rotor of an electric motor.

### BACKGROUND OF THE INVENTION

Electric motors usually consisting of a rotor and a corresponding stator are known, in which the rotor is formed by a series of lamination stacks, each of which consist of overlapping discoidal laminations.

In particular, in each lamination stack there is provided a plurality of seatings, also called slots, evenly distributed along a peripheral zone of the lamination stack, each configured to receive a respective magnet. The seatings have two different orientations symmetrical to each other with respect to the radial direction of the lamination stack, and are placed alternated so that two consecutive seatings substantially form a "V", and all the seatings, as a whole, substantially form a star.

Apparatuses for inserting magnets in the lamination stack are also known, which provide a device for loading the magnets in a lamination stack model, also called a hopper, which reproduces the seatings of the magnets. When the lamination stack model is completely filled with the magnets, they are transferred toward the lamination stack to be filled, which will then be used to make the rotor.

Document US-A1-2021/242757 describes a device for inserting magnets in a lamination stack comprising a loading device provided with a plurality of magnet feeding channels, the channels having a twisted development so as to orient each magnet in the direction of a corresponding seating of a lamination stack model below the loading device. Below the lamination stack model there is provided a lamination stack in which the magnets are inserted when all the seatings of the lamination stack model are filled with a magnet.

A disadvantage of this apparatus is that the channels require a minimum height in order to allow the magnets to correctly fall toward the seatings of the lamination stack model, which makes the apparatus bulky, especially in height.

There is therefore the need to perfect a magnet loading device, as well as an apparatus for inserting magnets in a lamination stack for a rotor, that can overcome at least one of the disadvantages of the state of the art.

To do this, it is necessary to solve the technical problem of creating a magnet loading device that is effective, fast and versatile in its operation.

In particular, one purpose of the present invention is to provide a magnet loading device that is capable of automatically loading and orienting the magnets directly from a feeding zone thereof.

Another purpose of the present invention is to provide a magnet loading device that can easily adapt to any distribution and orientation of the seatings for the magnets of a lamination stack model.

Another purpose of the present invention is to provide a magnet loading device which has a limited overall size.

Another purpose is to provide a magnet loading device and an apparatus for inserting magnets in a lamination stack that allow to load and insert different types of magnets in different groups of seatings of a same lamination stack.

Another purpose of the present invention is to develop a method for loading magnets in an accommodating body that allows to automatically load and orient the magnets directly from a feeding zone thereof.

Another purpose is to develop a method for inserting magnets in a lamination stack that allows to load and insert magnets in a lamination stack in an easy, fast and versatile manner.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to resolve the technical problem disclosed above in a new and original way, also achieving considerable advantages compared to the state of the prior art, a magnet loading device according to the present invention comprises an accommodating body rotatable around a first axis of rotation and equipped with a plurality of magnet housing seatings distributed along a peripheral zone of the accommodating body, and at least one magnet loading member. In particular, the housing seatings are made through, that is, they are open in correspondence to the upper surface and the lower surface of the accommodating body.

By accommodating body we mean a lamination stack model which identically reproduces the seatings of the lamination stack to be filled, that is, it reproduces the seatings in shape, sizes, number and relative positioning. In this way, by filling the accommodating body, the magnets are already pre-arranged to be inserted in the lamination stack.

By lamination stack we mean the type of ferromagnetic core currently most used in the production of rotors of permanent magnet electric machines. Despite this, in the current state of the art there are emerging technologies such as solid or monobloc ferromagnetic cores obtainable with alternative techniques such as press and sintering of powders of soft magnetic composite (SMC) materials. Since the geometry of these alternatives is similar to that of the lamination stack, such alternatives should be considered as technical equivalents; consequently, the present invention is applicable in all the different embodiments also to other types of ferromagnetic cores. In accordance with one aspect of the present invention, the magnet loading member is rotatable around a second axis of rotation parallel to the axis of rotation of the accommodating body, and it comprises at least one loading seating configured and placed in such a way as to at least partly house a magnet which is fed to the magnet loading member in a substantially radial direction.

The second axis of rotation is distant from the first axis of rotation so that the at least one loading member partly overlaps a portion of the peripheral zone of the accommodating body. Moreover, the at least one loading member is configured to rotate the at least one loading seating between an inlet position for receiving a magnet, and a loading position for axially releasing the magnet loaded into the at least one loading seating into one of the plurality of magnet housing seatings, the loading seating being placed distant from the plurality of magnet housing seatings when it is in the inlet position, and overlapping one of the housing seatings when it is in the loading position.

Preferably, the loading member is a loading wheel. The loading seatings, preferentially oriented in such a way as to be placed along radial directrices, are advantageously open in correspondence to a lateral surface of the loading member, in order to facilitate the feeding of the magnets into the loading seatings.

Doing so achieves at least the advantage of having a loading member capable of loading the magnets one by one and orienting them individually in any direction whatsoever, modifying their orientation with respect to their original direction of feed.

During use, the overlap of the loading seatings of the loading member with the housing seatings of the accommodating body occurs in correspondence to a loading position, unique for each loading member. It is in correspondence to this loading position that the release of the magnet from the loading member toward the seating of the accommodating body occurs. In such loading positions, one loading seating of a rotatable loading member overlaps with one respective housing seating of the accommodating body, regardless of its orientation and its position with respect to a radial direction of the accommodating body.

According to some embodiments, the loading member is configured and sized in such a way that when one loading seating is in correspondence to a loading position, the other loading seating is in an inlet position in order to radially receive another magnet which will be loaded in the accommodating body. For example, at least two adjacent loading seatings are oriented in such a way as to form an angle between them equal to the angle between a median axis of the magnet housing seating which is located in correspondence to the loading position and a median axis of the magnet loading seating which is located in the inlet position, wherein the median axes are placed perpendicular to, and passing through, the same second axis of rotation of the loading member that has the loading seating being considered. This feature allows to speed up the step of loading the magnets in the accommodating body, eliminating the time dedicated to orienting the loading member correctly in order to allow a following magnet to be fed.

In accordance with some embodiments, the loading member has a number of loading seatings correlated to the number of seatings of the accommodating body to be filled with the magnets. For example, the number of loading seatings can be the same as, or half, the number of magnet housing seatings to be filled, so as to allow to fill all, or half, the seatings during a 360° rotation of the loading member and the accommodating body. This allows to further speed up the step of loading the magnets in the accommodating body. Preferably, the angle between two successive loading seatings is equal to the angle that forms between the loading seating which is in the inlet position and the loading seating which is in the loading position.

In accordance with some embodiments, the at least one loading seating is configured as a pocket having an inlet aperture from which a magnet enters, an abutment bottom opposite the inlet aperture and on which the magnet impacts when it is fed radially, and two opposite lateral walls placed at a distance substantially equal to a thickness of the magnet.

According to some embodiments, the housing seatings of the accommodating body are divided into a first series of seatings oriented according to a first angle with respect to a radial direction of the accommodating body, and a second series of seatings oriented according to a second angle with respect to a radial direction of the accommodating body. In particular, the seatings are organized in pairs, each of which comprises one seating of the first series and one seating of the second series. Advantageously, the loading device comprises two loading members, a first loading member for loading magnets in the first series of seatings and a second loading member for loading magnets in the second series of seatings. The two loading members can be placed symmetrically with respect to a diameter of the accommodating body.

According to some embodiments, the plurality of housing seatings of the accommodating body comprises a first series of seatings of the same size and a second series of seatings of the same size, but different from the size of the first series of seatings, and the magnet loading device comprises a first loading member for loading magnets in the first series of seatings and a second loading member for loading magnets in the second series of seatings.

In accordance with some embodiments, the accommodating body comprises a blocking device configured to temporarily and selectively block the magnets inside the housing seatings. This blocking is achieved by preventing the magnets from falling through the seatings. The blocking device advantageously comprises a plurality of blocking members integrated in the accommodating body in correspondence to a bottom wall thereof. Each blocking member is advantageously configured to at least partly close one respective seating. The blocking members can be configured as diaphragms, each one being mobile between a position of engagement in which at least one seating of the plurality of housing seatings is at least partly closed at the bottom, and a position of disengagement in which the at least one seating of the plurality of housing seatings is completely cleared in correspondence to a bottom wall of the accommodating body.

The blocking, if the overall sizes allow it, can also be carried out by placing a sliding partition, unconstrained from the rotary motion of the lamination stack model and on the bottom thereof. This partition will have two positions: one of engagement during the loading step, and one of disengagement.

In accordance with another aspect of the present invention, an apparatus according to the present invention for inserting magnets in a lamination stack for a rotor comprises at least one magnet loading device as described above and a station for inserting magnets in a lamination stack, the insertion station being distanced from the at least one magnet loading device.

According to the invention, the apparatus comprises a magnet transferring device which is displaceable between the at least one magnet loading device and the insertion station. In particular, the transfer device is configured to transfer the magnets from the at least one magnet loading device to the insertion station. Advantageously, the transfer device comprises a fixed lamination stack model, shaped as a cylindrical body, having a plurality of transfer seatings arranged in the same way as the arrangement of the plurality of magnet housing seatings of the rotatable accommodating body. By the expression 'arranged in the same way' we mean that the same number of seatings are present, having the same shape and the same sizes, and collocated in the same positions with respect to the housing seatings of the rotatable accommodating body. In practice, the fixed lamination stack model is identical to the rotatable accommodating body (and therefore also to the lamination stack to be filled) but it is not rotatable. Advantageously, the seatings of the fixed lamination stack model are also made through. The fixed lamination stack model is integrated in the transfer device and moves with it. The retention of the magnets during the transfer is guaranteed by a dedicated retention system.

In accordance with some embodiments, the insertion station comprises a magnet thrusting member configured to be placed above the lamination stack and mounted mobile in order to thrust the magnets from the fixed lamination stack model of the transfer device into the seatings of the lamination stack.

Advantageously, the thrust member comprises thrust elements configured to be inserted each into a respective seating of the fixed lamination stack model so that each one thrusts a respective magnet into the corresponding seating of the lamination stack.

In accordance with some embodiments, the apparatus comprises a first magnet loading device for loading a first type of magnet, and a second magnet loading device for loading a second type of magnet. In this case, the apparatus comprises in any case a single transfer device and a single insertion station. The two magnet loading devices are distanced from each other and from the insertion station. The lamination stack to be filled therefore comprises a first group of seatings for receiving the first type of magnets, and a second group of seatings for receiving the second type of magnets. At least the fixed lamination stack model of the transfer device comprises a first group of seatings for receiving the first type of magnets, and a second group of seatings for receiving the second type of magnets.

According to another aspect of the present invention, a method for loading magnets in an accommodating body rotatable around a first axis of rotation and equipped with a plurality of magnet housing seatings distributed along a peripheral zone of the rotatable accommodating body comprises the steps of feeding, in an ordered succession, in a substantially radial direction, a plurality of magnets toward at least one magnet loading member rotatable around a second axis of rotation parallel to the first axis of rotation and comprising at least one loading seating configured and placed in such a way as to be able to at least partly accommodate a magnet fed to the loading member; inserting a magnet in the at least one loading seating in correspondence to an inlet position distant from the plurality of magnet housing seatings; rotating the loading member around the second axis of rotation so as to displace the at least one loading seating, in which the magnet is housed, toward a loading position in which the at least one loading seating overlaps one of the magnet housing seatings of the rotatable accommodating body, so that the magnet is released axially inside the magnet housing seating below.

Advantageously, the method as above is embodied by means of a magnet loading device as disclosed above.

According to another aspect of the present invention, a method for inserting magnets in a lamination stack comprises the steps of the method for loading magnets in a rotatable accommodating body as described above in correspondence to a magnet loading device; a step of releasing the magnets loaded in the rotatable accommodating body toward a transfer device comprising a fixed lamination stack model, which in turn comprises a plurality of transfer seatings arranged in the same way as the arrangement of the plurality of magnet housing seatings; a step of transferring the magnets by displacing the transfer device from the magnet loading device toward a station for inserting the magnets in the lamination stack; and a step of inserting the magnets in the lamination stack in correspondence to the insertion station.

Advantageously, the magnet loading device is as disclosed above.

Favorably, the magnet insertion method is embodied by means of an apparatus as disclosed above.

In accordance with some embodiments, before the step of releasing the magnets toward the transfer device, the steps of the method for loading magnets in the rotatable accommodating body are repeated until all the magnet housing seatings are filled with a corresponding magnet.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic plan view of a magnet loading device according to the present invention;
- fig. 2 is a schematic lateral view of an apparatus for inserting magnets in a lamination stack for a rotor according to the present invention;
- fig. 2A is a plan view of a transfer device of the apparatus of fig. 2;
- fig. 3 is a schematic plan view of the magnet loading device of fig. 1 with other details;
- fig. 4 is a section view along a vertical plane of the magnet loading device of fig. 3, in which a temporary magnet blocking device is visible in detail;
- figs. 5A, 5B and 5C are plan views of the magnet loading device of fig. 1, in which a sequence of magnet loading steps is shown;
- figs. from 6A to 6D are schematic lateral views of the apparatus for inserting magnets in the lamination stack for a rotor of fig. 2, which shows a sequence of steps for inserting magnets in a lamination stack;
- figs. 7A and 7B are schematic plan views of a variant of the magnet loading device, depicted in two different operating steps;
- fig. 8 is a schematic plan view of two magnet loading devices of a variant of an apparatus for inserting magnets in a lamination stack for a rotor;
- fig. 9 is a schematic lateral view of the variant of an apparatus for inserting magnets in a lamination stack for a rotor which comprises the two magnet loading devices of fig. 8; and
- fig. 9A is a plan view of a transfer device of the apparatus of fig. 9.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

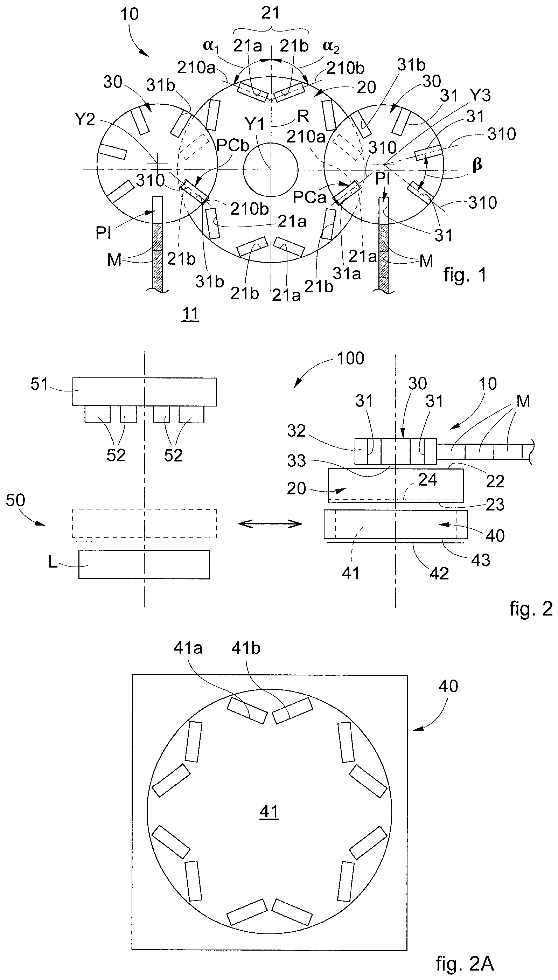

With reference to fig. 1, a device 10 according to the present invention for loading magnets M in a corresponding apparatus 100 for inserting magnets M in a lamination stack L comprises an accommodating body 20, in which the magnets M are temporarily accommodated, which is rotatable around a first axis of rotation Y1, and a pair of loading members 30, 30', which are also rotatable around respective axes of rotation Y2, Y3. The first axis of rotation Y1 is parallel to the axes of rotation Y2, Y3 of the pair of loading members 30, 30'.

In particular, the temporary accommodating body 20 comprises a plurality of pairs 21 of seatings, each of which substantially forms a "V" and comprises a first seating 21a oriented according to a first angle α1 with respect to a radius R of the accommodating body 20, and a second seating 21b oriented according to a second angle α2 with respect to the same radius R, symmetrical to the first angle with respect to the same radius R. In particular, the accommodating body 20, which has a circular section, has six pairs 21 of seatings 21a, 21b regularly distributed along a peripheral portion of the accommodating body 20 which, overall, form a substantially star-shaped pattern. It is evident that other embodiments may provide a different number of pairs of seatings, without thereby departing from the scope of the present invention.

The seatings 21a, 21b have a substantially rectangular section, with a respective median axis 210a, 210b forming the first angle α1 and the second angle α2, respectively, with the radius R of the accommodating body 20 (fig. 1).

In the example given here, each loading member comprises a loading wheel 30 equipped with a plurality of radial loading seatings 31, having a substantially rectangular shape. Each radial loading seating 31 is placed in such a way that the long side of the rectangle, and therefore a median axis 310 thereof parallel to that side, is directed in a radial direction with respect to the loading wheel 30, or parallel to that direction.

Each loading seating 31 is configured to accommodate only one magnet M at a time.

The loading seatings 31 are open in correspondence to the lateral wall 32 of the corresponding loading wheel 30, so that the magnets M are inserted therein radially. In particular, the magnets are fed from a feeding zone 11, located on the same horizontal plane as the loading wheels 30. The feeding zone 11 can be conformed, for example, as a rack provided with magnet feeding belts.

The magnets M are fed sideways, that is, placed resting on their side with the smaller thickness, so that they can be inserted in the loading seatings 31 simply thanks to the feeding action of the corresponding belt. The magnets M are inserted in a loading seating 31 in correspondence to an inlet position PI (fig. 1).

The loading wheels 30 and the accommodating body 20 are placed horizontally. The loading wheels 30 are located above the accommodating body 20 (figs. 1 and 2) and partly overlapping its peripheral portion so that the loading seatings 31 can be aligned with the seatings 21a, 21b in a vertical direction, thus defining two loading positions PCa, PCb for the seatings 21a and the seatings 21b, respectively. The loading of the magnets M is carried out individually, by falling, from a loading seating 31 in a corresponding seating 21a, 21b below. For this purpose, the loading seatings 31 are open in correspondence to the lower wall 33 of the loading wheels 30. Similarly, the seatings 21a, 21b are also open in correspondence to the upper wall 22 of the accommodating body 20.

Each loading wheel 30 fills a respective series of seatings 21a, 21b. In particular, as seen from fig. 1, the loading wheel 30 on the left is positioned so that its loading seatings 31, when they reach the respective loading position PCb, are aligned with a second seating 21b. Conversely, when the loading seatings 31 of the loading wheel 30 on the right reach the corresponding loading position PCa, they are aligned with a first seating 21a.

In the example given here, each loading wheel 30 has six loading seatings 31, a number that corresponds to the number of first seatings 21a and second seatings 21b of the accommodating body 20. In this way, it is possible to fill all the seatings 21a, 21b by operating a single revolution of each loading wheel 30 and of the accommodating body 20.

Furthermore, to optimize the loading times of the magnets M, the median axes 310 of the loading seatings 31 of one loading wheel 30 form, with the median axis 310 of the following loading seating 31, an angle β equal to the angle δ between the axis 210a, 210b of the seatings 21a, 21b in the loading position PCa, PCb and the direction of the median axis 310 of the loading seatings 31 when they are in the inlet position PI defined above. In doing so, as will be explained in more detail below, while one magnet M is loaded in the accommodating body 20 in correspondence to the loading position PCa, PCb, a following magnet M is inserted in a radial direction inside the following loading seating 31 according to the direction of rotation of the loading wheel 30 (fig. 1).

Note that in the example given here the six loading seatings 31 all form an angle β between each other, except for the angle between a first loading seating 31a and a last loading seating 31b (fig. 1). Therefore, the loading seatings 31 are regularly distributed only along an arc of a circle in the loading wheel 30, an arc of a circle whose angle corresponds to five times the angle β. This arrangement is advantageous in that it allows both to load the magnets M in the loading seatings 31 while other magnets M are loaded in the seatings 21a, 21b in the loading positions PCa, PCb, and also to completely fill the accommodating body 20 with magnets M during a complete revolution of the accommodating body 20 and of the loading wheels 30.

The magnet loading device 10 is configured to be included in an apparatus 100 for inserting magnets M in a lamination stack L, which will then be integrated in a rotor of an electric motor.

The apparatus 100 comprises, in addition to the magnet loading device 10, a transfer device 40 and an insertion station 50, in correspondence to which the magnets M are inserted in the lamination stack L (fig. 2 and 2A).

The transfer device 40 is configured to transfer the magnets M from the magnet loading device 10 to the insertion station 50, and is therefore displaceable, in particular translatable, between a position in which it is placed in proximity to the device 10, and the insertion station 50 (fig. 2).

The transfer device 40 comprises a cylindrical lamination stack model 41 containing a plurality of seatings 41a, 41b arranged in the same way as the arrangement of the housing seatings 21a, 21b of the accommodating body 20, in number, shape, sizes and position (fig. 2A). The lamination stack model 41 is fixed in the transfer device 40, in particular it does not rotate on itself.

The transfer device 40 is located below the accommodating body 20 of the magnet loading device 10, so that the magnets M can pass from the accommodating body 20 to the fixed lamination stack model 41 by falling. This implies that the seatings 21a, 21b of the accommodating body 20 are open in correspondence to the bottom wall 23 of the accommodating body 20, as well as in its upper wall 22. The fall of the magnets M from the accommodating body 20 is selectively prevented by a blocking device 24, placed at the lower part thereof, which will be described in detail below.

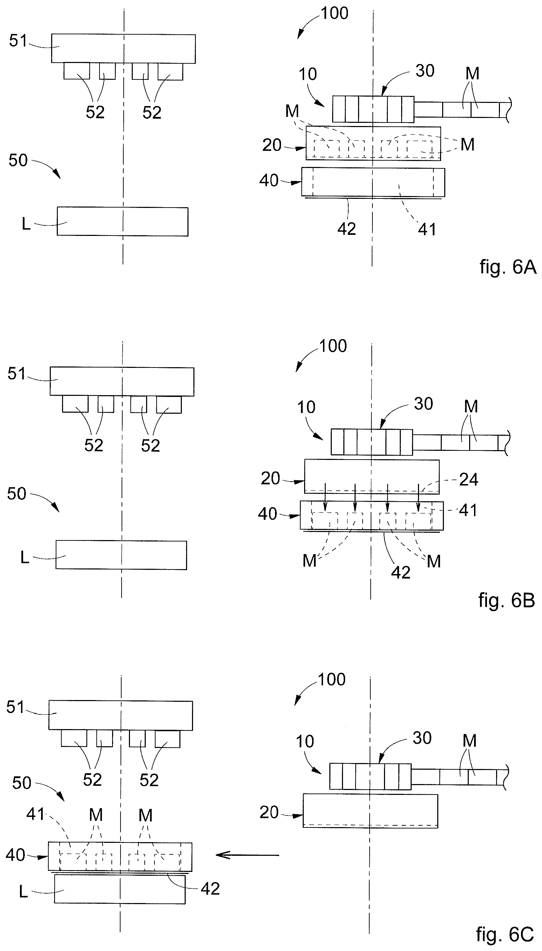

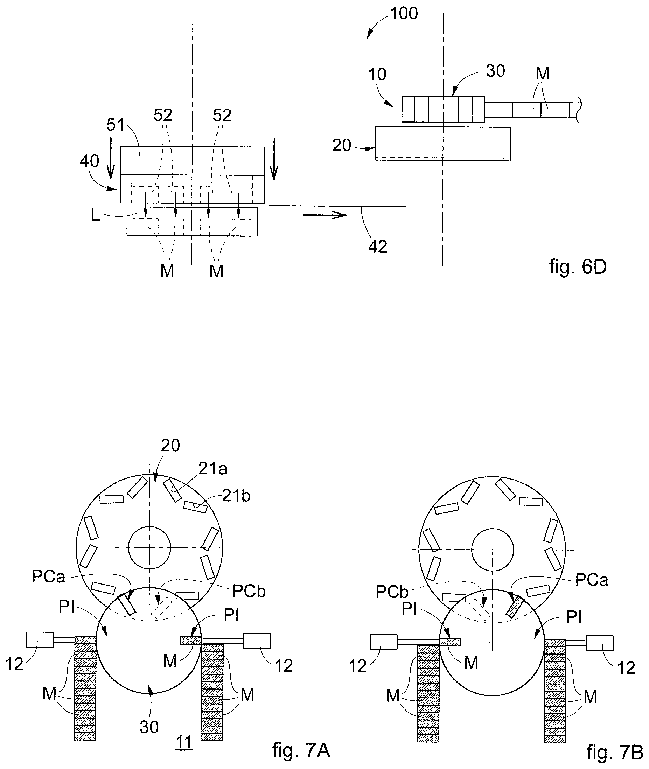

The insertion station 50, where the lamination stack L to be filled with the magnets M is collocated, is adjacent to the magnet loading device 10 (fig. 2). It comprises a thrust member 51 configured to be placed above the lamination stack L and vertically displaceable between a rest position, raised with respect to the lamination stack L (figs. 6A-6C), and a lowered insertion position, in which the thrust member 51 exerts a thrust on the magnets M so as to insert them in the lamination stack L below (fig. 6D).

To operate the thrust of the magnets M through the lamination stack model 41 of the transfer device 40, the thrust member 51 comprises a plurality of thrust elements 52 configured and positioned to thrust the magnets M when they are in the seatings 41a, 41b of the fixed lamination stack model 41. In particular, the thrust elements 52 are identical in number, shape, size and positioning to the seatings 42a, 42b of the fixed lamination stack model 41 (and therefore also to the seatings of the lamination stack L).

To prevent the free fall of the magnets M from the fixed lamination stack model 41, the transfer device 40 is provided with a blocking member 42, in particular a plate hinged to the lower surface 43 of the lamination stack model 41 so as to rotate between a blocking position, in which the plate occludes all the seatings 41a, 41b of the fixed lamination stack model 41 (fig. 2), and a position of disengagement, in which the plate is displaced and leaves all the seatings 41a, 41b of the fixed lamination stack model 41 uncovered (fig. 6D), thus allowing the magnets M to fall toward the lamination stack L.

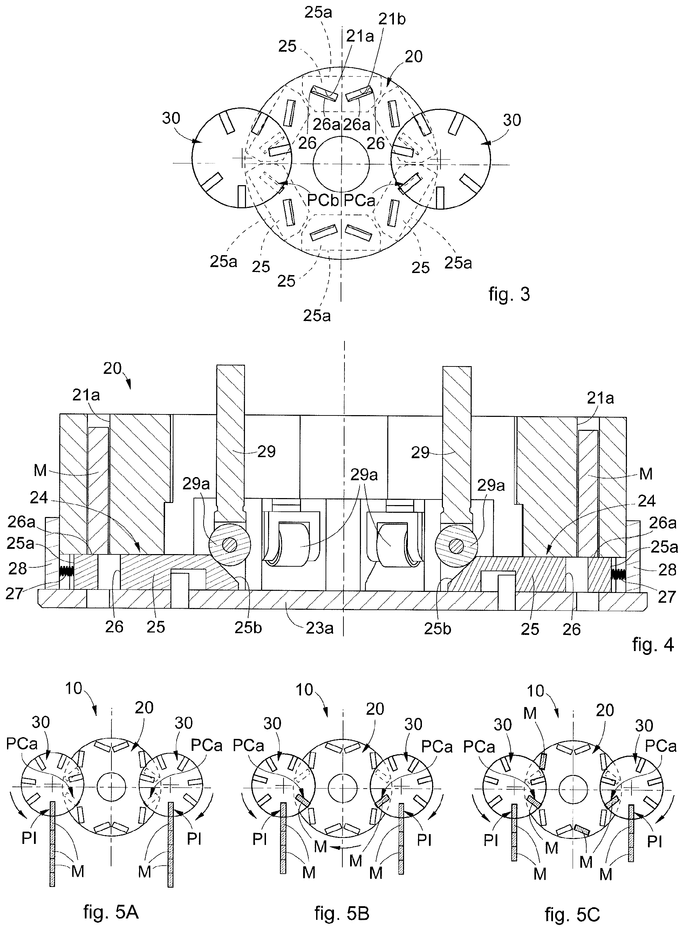

Note that the blocking device 42 of the transfer device 40 is different from, and structurally simpler than, the lower blocking device 24 of the accommodating body 20, which we will now explain in detail with particular reference to figs. 3 and 4.

The lower blocking device 24 is integrated in the accommodating body 20 and provides six diaphragms 25 configured to each cover a respective pair 21 of seatings 21a, 21b (fig. 3). Each diaphragm 25, schematically shown with a dashed line in fig. 3 and better visible in fig. 4, has the shape of a substantially trapezoidal member in which a pair of apertures 26 is created that reproduces the imprint of a respective pair 21 of seatings 21a, 21b of the accommodating body 20. Each diaphragm 25 is supported by a common fixed plate 23a (fig. 4), which constitutes the bottom wall 23 of the temporary accommodating body 20 provided with apertures in correspondence to the magnet housing seatings, and is also displaceable between a position of engagement in which the apertures 26 are offset with respect to the corresponding seatings 21a, 21b and partly cover them (figs. 3, 4), and a position of disengagement in which the apertures 26 are aligned with the seatings 21a, 21b and allow the magnets M to fall. In particular, in the position of engagement, each diaphragm 25 partly obstructs a corresponding pair 21 of seatings 21a, 21b by means of an edge 26a of its apertures 26 which is offset with respect to the seatings 21a, 21b so as to protrude inside their perimeter.

In their blocking position the diaphragms 25 are kept elastically thrust toward the first axis of rotation Y1 by means of a spring 27 interposed between the external lateral surface 25a of the diaphragm 25 and a peripheral wall 28 of the accommodating body 20 (fig. 4).

On the side closest to the first axis of rotation R1, each diaphragm 25 comprises an inclined surface 25b. The blocking device 24 also comprises thrust members 29 equipped with a respective end wheel 29a placed in contact with each inclined surface 25b.

The thrust members 29 are oriented vertically with the end wheel 29a downward and are displaceable between a rest position (fig. 4) in which they do not exert any pressure on the inclined surface 25b, keeping the diaphragms 25 in the position in which they close the seatings 21a, 21b, and a lowered thrust position in which, due to the thrust of each thrust member 29 and due to the presence of the corresponding end wheel 29a that thrusts against the inclined surface 25b of the corresponding diaphragm 25, the latter is displaced radially toward the outside of the accommodating body 20. This outward radial displacement determines the alignment of the apertures 26 with the seatings 21a, 21b.

Note that the displacement of the diaphragms 25 can also be achieved by means of devices other than the one just described but technically equivalent thereto, such as for example a cam device of the type known in the art.

The operation of the magnet loading device 10 and of the apparatus 100 for inserting magnets in a lamination stack for a rotor described heretofore comprises the following steps.

The magnets M, placed on two rows and preferably oriented sideways with respect to their direction of feed (fig. 1) are made to advance so that one magnet M enters the first loading seating 31a of each of the loading wheels 30 (fig. 5A). The accommodating body 20 is already in such a position that it has two seatings 21a, 21b (one of each of either the first series or the second series) located in correspondence to the two loading positions PCa, PCb defined above.

The rotation of both loading wheels 30 by an angle β is determined. The left loading wheel 30 is rotated counterclockwise while the right loading wheel 30 is rotated clockwise, so as to take their respective first loading seatings 31a into the corresponding loading position PCa, PCb (fig. 5B). At this point, the loading seating 31 which follows the first loading seating 31a is aligned with the inlet position PI and receives a new magnet from the feeding zone 11 (fig. 5B). Meanwhile, the magnet M in correspondence to the loading position PCa, PCb falls into the underlying seating 21a, 21b of the accommodating body 20.

A clockwise rotation of the accommodating body 20 by an angle equal to 360 degrees divided by the number of pairs 21 of seatings 21a, 21b present in the accommodating body 20 is then performed, for example by an angle equal to 60 degrees in the example described here in which six pairs of seatings 21 are provided, so as to take a following seating 21a, 21b in correspondence to the loading position PCa, PCb (fig. 5C). A new rotation of the loading wheels 30 as explained above is then performed, so that the second magnet M fed into the loading wheels 30 is displaced into the corresponding loading position PCa, PCb (fig. 5C), determining its fall toward the corresponding seating 21a, 21b. Simultaneously, a new magnet M is fed into the following loading seating 31 of the loading wheels 30.

This sequence of steps is performed six times in total, so as to fill the six pairs 21 of seatings 21a, 21b of the accommodating body 20. During these steps, the blocking device 24 remains in the position of engagement, preventing the fall of the magnets M from the accommodating body 20.

Once the six pairs 21 of seatings 21a, 21b are filled, the transfer device 40 is located below the magnet loading device 10 with the lamination stack model 41 perfectly aligned with the accommodating body 20 (fig. 6A), in particular the seatings 41a, 41b of the lamination stack model 41 are perfectly aligned with the seatings 21a, 21b of the accommodating body 20.

The drive of the lower blocking device 24 is then commanded so that the diaphragms 25 are displaced toward the outside of the accommodating body 20, therefore aligning their apertures 26 with the seatings 21a, 21b and allowing the magnets M to fall into the seatings 41a, 41b of the lamination stack model 41 (fig. 6B). Obviously, in this step the blocking device 42 of the transfer device 40 is in the blocking position, to prevent the subsequent fall of the magnets M.

The displacement of the transfer device 40 toward the insertion station 50 is then commanded (fig. 6C) so that the lamination stack model 41 is aligned with the lamination stack L to be filled and with the thrust member 51.

Then the blocking device 42 is brought into its position of disengagement, so as to allow the magnets M to fall toward the lamination stack L, and the lowering of the thrust member 51 so that its thrust elements 52 are inserted into the seatings 41a, 41b of the lamination stack model 41 and thrust the magnets M in the seatings of the lamination stack L, which is then ready to be used to make a rotor or stator of an electric motor (fig. 6D).

With reference to figs. 7A and 7B, a variant of the magnet loading device 10 comprises a single loading wheel 30 equipped with two loading seatings 31. Two rows of magnets M in diametrically opposite positions are fed to the loading wheel 30, so as to have two inlet positions PI in the loading seatings 31.

The loading wheel 30 is configured to load the magnets M in both the first series of seatings 21a and also the second series of seatings 21b in two respective loading positions PCa, PCb substantially symmetrical to each other. The two loading seatings 31 of the loading wheel 30 form between them an angle β corresponding to the angle between the axis 210a, 210b of the first and second seatings 21a, 21b in their respective loading position PCa, PCb and the axis of the loading seating 31 in the inlet position PI of the opposite row of magnets M.

In this way, while one magnet M is loaded from a first loading seating 31 in correspondence to its loading position PCa, PCb, a following magnet M is made to enter in the other loading seating 31. This allows to optimize loading times even with a single loading wheel 30. The loading of the magnets M in the loading seatings 31 is carried out by means of two thrust members 12, each located in front of a respective inlet position PI (figs. 7A and 7B).

In this example, the positioning of the seatings 21a, 21b in the corresponding loading positions PCa, PCb requires a minimum rotation of the accommodating body 20, for example of 5°, but it is possible to adjust the angle β between the loading seatings 31 and/or the positioning of the loading wheel 30 with respect to the accommodating body 20, so that this minimum rotation is no longer necessary.

The operation of the device 10 in this variant is similar to the first variant already described previously, with the substantial difference that the loading wheel 30 oscillates between the position shown in fig. 7A, in which it loads a magnet M in a seating 21a in the loading position PCa and, at the same time, a magnet M is made to enter in the second loading seating 31 by means of the corresponding thrust member 12, and the position shown in fig. 7B, in which the magnet M previously made to enter the second loading seating is loaded in a seating 21b in correspondence to the loading position PCb while, at the same time, a magnet M is made to enter the first loading seating 31 by means of the corresponding thrust member 12.

In the example provided, in which there are six pairs of seatings, the accommodating body 20 is made to rotate by 60° in each step, and the steps described above are repeated until all the seatings 21a, 21b are filled with a respective magnet M.

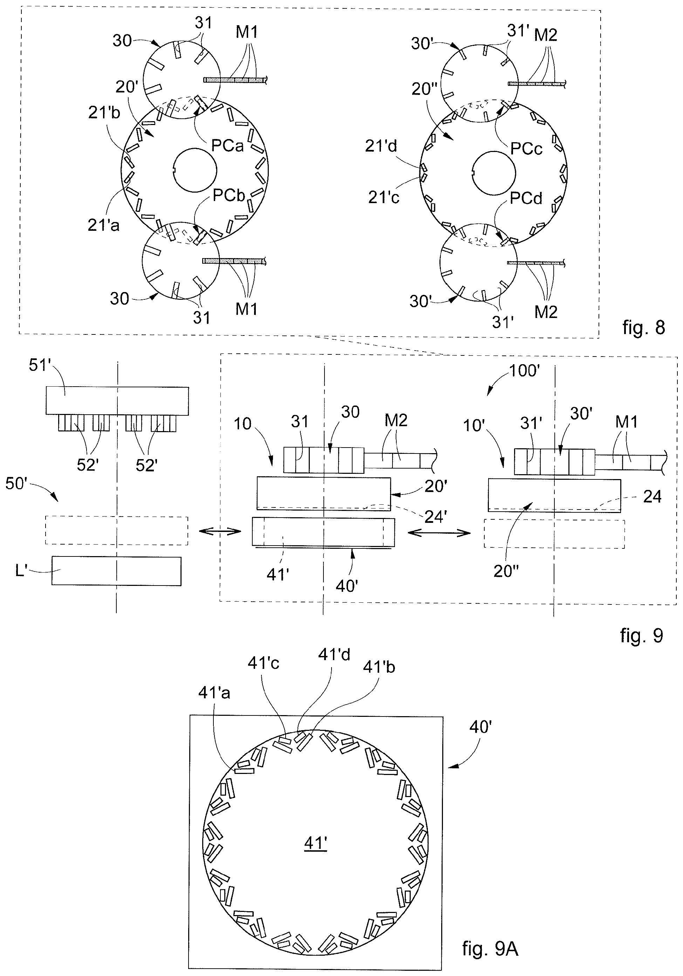

With reference to figs. 8 and 9, a second embodiment of the apparatus 100' for inserting magnets in a lamination stack L' is provided. In this second embodiment, the apparatus 100 is configured to insert two different types of magnets M1, M2 in a same lamination stack L'. For this purpose, the lamination stack L and the lamination stack model 41' comprise a same plurality of seatings 41'a, 41'b, 41'c, 41'd, divided into first pairs of seatings 41'a, 41'b configured to house a first type of magnet M1, and second pairs of seatings 41'c, 41'd configured to house a second type of magnet M2 (figs. 9 and 9A).

The first and second pairs of seatings 41'a, 41'b, 41'c, 41'd are distributed along a peripheral zone of the lamination stack L and of the corresponding model, on two respective circumferences.

In this case, two distinct magnet loading devices 10, 10' are provided, a first device 10 (on the left in fig. 8) for loading the first type of magnet M1 in a plurality of first pairs of seatings 21'a, 21'b which correspond to the aforementioned first pairs of seatings 41'a, 41'b of the lamination stack model 41, and a second device 10' (on the right in fig. 8) for loading the second type of magnet M2 in a plurality of second pairs of seatings 21'c, 21'd which correspond to the aforementioned second pairs of seatings 41'c, 41'd of the lamination stack model 41. In the second device 10' there are then defined two loading positions PCc, PCd for loading the seatings 21'c, 21'd, wherein these seatings are overlapping and coaxial with a loading seating 31' of the corresponding loading wheel 30'.

The two devices 10, 10' differ from each other for their respective accommodating body 20', 20", each of which comprises only the respective pair of seatings to be loaded. More precisely, the accommodating body 20' of the first magnet loading device 10 contains only the first pairs of seatings 21'a, 21'b, while the accommodating body 20" of the second magnet loading device 10' contains only the second pairs of seatings 21'c, 21'd.

Moreover, the two devices 10, 10' also differ in the sizes of the loading seatings 31, 31' of the loading wheels 30, 30', as well as in their positioning with respect to the accommodating body 20', 20", so as to overlap the loading seatings 31, 31' with the corresponding seatings 21'a, 21'b, 21'c, 21'd in the loading positions PCa, PCb, PCc, PCd.

The operation of the two magnet loading devices 10, 10' is analogous to what described previously with reference to figs. 6a-6d.

As an alternative to the variant shown in fig. 9, in which there are two magnet loading devices 10, 10', it is possible to provide that the apparatus 100' contains only one magnet loading device configured to load both types of magnets. For example, the device can comprise two loading members, each of which loads a respective type of magnet, different from one another. It can also be provided that the single magnet loading device contains a single loading member with two different types of loading seatings, each of the two types being intended to load a respective type of magnet. For example, the device can be of the type with a single loading member with two loading seatings, as shown in figs. 7A-7B, wherein one of the loading seatings is configured to accommodate a first type of magnet and the other loading seating is configured to accommodate the second type of magnet.

The apparatus 100' for inserting magnets in a lamination stack L' comprises, in addition to the two magnet loading devices 10, 10' as above, a single transfer device 40' and a single insertion station 50'. The transfer device 40' and the insertion station 50' are identical to those of the first variant of the apparatus, with the exception of the corresponding lamination stack model 41' that reproduces the seatings of the lamination stack L' to be filled, as shown in fig. 9A, and of the thrust elements 52' which correspond to the seatings 41'a, 41'b, 41'c, 41'd of the lamination stack model 41' and of the lamination stack L'.

The two magnet loading devices 10, 10' are distanced from each other and are also distanced from the insertion station 50' (fig. 9). The transfer device 40' is displaceable, in particular translatable between the first magnet loading device 10, the second magnet loading device 10' and the insertion station 50'.

The operation of the apparatus 100' provides to load the rotatable accommodating bodies 20', 20" with the respective types of magnets M1, M2. Once the accommodating bodies 20', 20" are loaded, the transfer device 40' is displaced below the first magnet loading device 10 to unload the first magnets M1 therein. Subsequently, the transfer device 40' is displaced below the second magnet loading device 10' to unload the second magnets M2 therein.

At this point, the seatings 41'a, 41'b, 41'c, 41'd of the lamination stack model 41' are filled with both types of magnet M1, M2. The transfer device 40' is displaced in correspondence to the insertion station 50', where the magnets M1, M2 are inserted in the lamination stack L' with the aid of the thrust member 51'. The latter is suitably provided with thrust elements 52' that reproduce, in terms of number, shape, sizes and arrangement, both all the first pairs of seatings and also all the second pairs of seatings of the lamination stack L'.

It is clear that modifications and/or additions of parts or steps may be made to the magnet loading device 10, to the apparatus 100 for inserting magnets in a lamination stack for a rotor, and to the corresponding operating methods which have been described heretofore, without departing from the field and scope of the present invention, as defined by the claims.

It is also clear that, although the present invention has been described with reference to some specific examples, a person of skill in the art will be able to achieve other equivalent forms of magnet loading device and apparatus for inserting magnets in a lamination stack for a rotor, as well as the corresponding operating methods, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Magnet loading device (10, 10') comprising an accommodating body (20, 20') rotatable around a first axis of rotation (Y1) and equipped with a plurality of magnet housing seatings (21a, 21b, 21'a, 21'b, 21'c, 21'd) distributed along a peripheral zone of said accommodating body (20, 20') and at least one magnet loading member (30, 30') rotatable around a second axis of rotation (Y2, Y3) parallel to said first axis of rotation (Y1) and comprising at least one loading seating (31, 31') configured and placed to at least partly accommodate a magnet (M, M1, M2) which is fed to the magnet loading member (30, 30') in a substantially radial direction, **characterized in that** the second axis of rotation (Y2, Y3) is distant from said first axis of rotation (Y1) so that said at least one loading member (30, 30') partly overlaps a portion of said peripheral zone of said accommodating body (20, 20') **and in that** said at least one loading member (30, 30') is configured to rotate said at least one loading seating (31, 31') between an inlet position (PI) for receiving a magnet, and a loading position (PCa, PCb) for axially releasing the loaded magnet into one of said plurality of magnet housing seatings (21a, 21b, 21'a, 21'b, 21'c, 21'd), said loading seating (31, 31') being placed distant from said plurality of magnet housing seatings (21a, 21b, 21'a, 21'b, 21'c, 21'd) when it is in said inlet position (PI), and overlapping, when seen from axial direction, one of the housing seatings (21a, 21b, 21a, 21'b, 21'c, 21'd) when it is in said loading position (PCa, PCb).

2. Magnet loading device (10, 10') as in claim 1, **characterized in that** said at least one loading member (30, 30') is configured and sized in such a way that when one loading seating (31, 31') is placed in correspondence to the loading position (PCa, PCb, PCc, PCd), another loading seating (31, 31') of the same loading member (30, 30') is in the magnet inlet position (PI) in order to radially receive a magnet (M, M1, M2) which will be subsequently loaded in said accommodating body (20, 20').

3. Magnet loading device (10, 10') as in claim 2, **characterized in that** at least two adjacent loading seatings (31, 31') of said loading member (30, 30') are oriented in such a way as to form an angle (β) between them equal to an angle formed between a median axis (210a, 210b) of the magnet housing seating (21a, 21b, 21'a, 21'b, 21'c, 21'd) which is located in said loading position (PCa, PCb, PCc, PCd) and a median axis of the loading seating (31, 31') which is located in said inlet position (PI), said median axes being placed perpendicular to, and passing through, the same second axis of rotation (Y2, Y3) of the loading member (30, 30') that has the loading seating being considered.

4. Magnet loading device (10, 10') as in any claim hereinbefore, **characterized in that** said at least one loading seating (31, 31') is configured as a pocket having an inlet aperture from which the magnet (M, M1, M2) enters, an abutment bottom opposite the inlet aperture and on which the magnet impacts when it is fed radially, and two opposite lateral walls placed at a distance substantially equal to a thickness of the magnet.

5. Magnet loading device (10, 10') as in any claim hereinbefore, **characterized in that** said loading member (30, 30') is configured as a wheel comprising a plurality of loading seatings (31, 31') placed along radial directrices.

6. Magnet loading device (10, 10') as in any claim hereinbefore, **characterized in that** said plurality of magnet housing seatings (21a, 21b, 21'a, 21'b, 21'c, 21'd) are divided into a first series of seatings (21a, 21'a, 21'c) oriented according to a first angle (α1) with respect to a radial direction (R) of said accommodating body (20), and a second series of seatings (21b, 21'b, 21'd) oriented according to a second angle (α2) with respect to a radial direction (R) of said accommodating body (20).

7. Magnet loading device (10, 10') as in claim 6, **characterized in that** said plurality of magnet housing seatings (21a, 21b, 21'a, 21'b, 21'c, 21'd) are organized in pairs, each pair comprising one seating of said first series of seatings (21a, 21'a, 21'c) and one seating of said second series of seatings (21b, 21'b, 21'd).

8. Magnet loading device (10, 10') as in claim 6 or 7, **characterized in that** the seatings of said first series of seatings (21a, 21a, 21'c) have the same or different size with respect to the size of the seatings of said second series of seatings (21b, 21'b, 21'd).

9. Magnet loading device (10, 10') as in any claim hereinbefore, **characterized in that** said accommodating body (20, 20') comprises a blocking device (24, 24') configured to temporarily and selectively hold the magnets (M, M1, M2) inside said magnet housing seatings (21a, 21b, 21'a, 21'b, 21'c, 21'd).

10. Magnet loading device (10, 10') as in claim 9, **characterized in that** said blocking device (24, 24') comprises a plurality of diaphragms (25), each diaphragm (25) being mobile between a position of engagement in which at least one seating of said plurality of magnet housing seatings (21a, 21b, 21'a, 21'b, 21'c, 21'd) is at least partly closed at the bottom, and a position of disengagement in which the at least one seating of said plurality of magnet housing seatings (21a, 21b, 21a, 21'b, 21'c, 21'd) is completely cleared in correspondence to a bottom wall (23) of said accommodating body (20, 20').

11. Apparatus (100, 100') for inserting magnets (M, M1, M2) in a lamination stack (L, L'), comprising at least one magnet loading device (10, 10') as in any claim hereinbefore, an insertion station (50, 50') for inserting magnets (M, M1, M2) in said lamination stack (L, L'), said insertion station (50, 50') being distanced from said at least one magnet loading device (10, 10'), and a transfer device (40, 40') displaceable between said at least one magnet loading device (10, 10') and said insertion station (50, 50'), and configured to transfer said magnets (M, M1, M2) from said at least one magnet loading device (10, 10') to said insertion station (50, 50').

12. Apparatus (100, 100') as in claim 11, **characterized in that** said transfer device (40, 40') comprises a lamination stack model (41, 41') having a plurality of transfer seatings (41a, 41b, 41'a, 41'b, 41'c, 41'd) arranged in the same way as the arrangement of said plurality of magnet housing seatings (21a, 21b, 21'a, 21'b, 21'c, 21'd).

13. Apparatus (100') as in claim 11 or 12, **characterized in that** it comprises a first magnet loading device (10) configured to load a first type of magnet (M1), and a second magnet loading device (10') configured to load a second type of magnet (M2), wherein said first (10) and second (10') magnet loading devices are distanced from each other and from said insertion station (50').

14. Method for loading magnets in an accommodating body (20, 20') rotatable around a first axis of rotation (Y1) and equipped with a plurality of magnet housing seatings (21a, 21b, 21a, 21'b, 21'c, 21'd) distributed along a peripheral zone of said rotatable accommodating body (20, 20'), comprising the steps of feeding, in an ordered succession, in a substantially radial direction, a plurality of magnets (M, M1, M2) toward at least one magnet loading member (30, 30') rotatable around a second axis of rotation (Y2, Y3) parallel to, and distant from, said first axis of rotation (Y1), and comprising at least one loading seating (31, 31') configured and placed in such a way as to be able to at least partly accommodate a magnet (M, M1, M2) fed to said loading member (30, 30'); inserting a magnet (M, M1, M2) in said at least one loading seating (31, 31') in correspondence to an inlet position (PI) distant from said plurality of magnet housing seatings (21a, 21b, 21'a, 21'b, 21'c, 21'd); rotating said loading member (30, 30') around said second axis of rotation (Y2, Y3) so as to displace said at least one loading seating (31, 31'), in which the magnet (M, M1, M2) is housed, toward a loading position (PCa, PCb) in which said at least one loading seating (31, 31') overlaps one of the magnet housing seatings (21a, 21b, 21'a, 21'b, 21'c, 21'd) of said rotatable accommodating body (20, 20'), so that the magnet is released axially inside the magnet housing seating (21a, 21b, 21a, 21'b, 21'c, 21'd) downward.

15. Method for inserting magnets in a lamination stack (L, L'), comprising the steps of the method for loading magnets in a rotatable accommodating body (20, 20') as in claim 14 in correspondence to a magnet loading device (10, 10'); a step of releasing the magnets (M, M1, M2) loaded in said rotatable accommodating body (20, 20') toward a transfer device (40, 40') comprising a lamination stack model (41, 41') comprising a plurality of transfer seatings (41a, 41b, 41'a, 41'b, 41'c, 41'd) arranged in the same way as the arrangement of the plurality of magnet housing seatings (21a, 21b, 21'a, 21'b, 21'c, 21'd); a step of transferring the magnets (M, M1, M2) by displacing said transfer device (40, 40') from said magnet loading device (10, 10') toward a magnet insertion station (50, 50'); and a step of inserting the magnets (M, M1, M2) in said lamination stack (L, L') in correspondence to said insertion station (50, 50').

## Patentansprüche

1. Magnetladevorrichtung (10, 10'), die einen um eine erste Drehachse (Y1) drehbaren Aufnahmekörper (20, 20') mit mehreren Magnetaufnahmen (21a, 21b, 21'a, 21'b, 21'c, 21'd), die entlang des Umfangs des Aufnahmekörpers (20, 20') angeordnet sind, sowie mindestens ein um eine zweite, parallel zur ersten Drehachse (Y1) angeordnete Drehachse (Y2, Y3) drehbares Magnetladeelement (30, 30') umfasst, wobei es mindestens eine Ladeaufnahme (31, 31') umfasst, die so konfiguriert und angeordnet ist, dass sie einen Magneten (M, M1, M2) zumindest teilweise aufnimmt, wobei der Magnet dem Magnetladeelement (30, 30') im Wesentlichen radial zugeführt wird, **dadurch gekennzeichnet, dass** die zweite Drehachse (Y2, Y3) von der ersten Drehachse (Y1) so weit beabstandet ist, dass das wenigstens eine Magnetladeelement (30, 30') einen Teil der Umfangszone des Aufnahmekörpers (20, 20') teilweise überlappt, **und dass** das wenigstens eine Ladeelement (30, 30') so konfiguriert ist, dass es die wenigstens eine Ladeaufnahme (31, 31') zwischen einer Einlassposition (PI) zum Aufnehmen eines Magneten und einer Ladeposition (PCa, PCb) zum axialen Freigeben des geladenen Magneten in eine der mehreren Magnetaufnahmen (21a, 21b, 21'a, 21'b, 21'c, 21'd) dreht, wobei die Ladeaufnahme (31, 31') in der Einlassposition (PI) in einem Abstand zu den mehreren Magnetaufnahmen (21a, 21b, 21'a, 21'b, 21'c, 21'd) und in axialer Richtung betrachtend überlappend mit einer der Magnetaufnahmen (21a, 21b, 21'a, 21'b, 21'c, 21'd), angeordnet ist, wenn es sich in der Ladeposition (PCa, PCb) befindet.

2. Magnetladevorrichtung (10, 10') nach Anspruch 1, **dadurch gekennzeichnet, dass** das mindestens ein Ladeelement (30, 30') so konfiguriert und dimensioniert ist, dass, wenn eine Ladeaufnahme (31, 31') in der Ladeposition (PCa, PCb, PCc, PCd) platziert ist, sich eine andere Ladeaufnahme (31, 31') desselben Ladeelements (30, 30') in der Magneteinlassposition (PI) befindet, um radial einen Magneten (M, M1, M2) aufzunehmen, der anschließend in den Aufnahmekörper (20, 20') geladen wird.

3. Magnetladevorrichtung (10, 10') nach Anspruch 2, **dadurch gekennzeichnet, dass** mindestens zwei benachbarte Ladeaufnahmen (31, 31') des Ladeelements (30, 30') so ausgerichtet sind, dass zwischen ihnen ein Winkel (β) gebildet wird, der gleich dem Winkel zwischen einer Mittelachse (210a, 210b) der Magnetaufnahme (21a, 21b, 21'a, 21'b, 21'c, 21'd) ist, die sich in der Ladeposition (PCa, PCb, PCc, PCd) und einer Mittelachse der Ladeaufnahme (31, 31'), die sich in der genannten Einlassposition (PI) befindet, wobei diese Mittelachsen senkrecht zur zweiten Drehachse (Y2, Y3) des die betrachtete Ladeaufnahme aufweisenden Ladeelements (30, 30') verlaufen und diese durchdringen.

4. Magnetladevorrichtung (10, 10') nach einem der vorhergehenden Ansprüche, **dadurch gekennzeichnet, dass** die mindestens eine Ladeaufnahme (31, 31') als Tasche mit einer Einlassöffnung, durch die der Magnet (M, M1, M2) eintritt, einem dem Einlass gegenüberliegenden Anschlagboden, auf den der Magnet beim radialen Zuführen aufprallt, und zwei gegenüberliegenden Seitenwänden in einem Abstand, der im Wesentlichen der Dicke des Magneten entspricht, ausgebildet ist.

5. Magnetische Ladevorrichtung (10, 10') nach einem der vorhergehenden Ansprüche, **dadurch gekennzeichnet, dass** das Ladeelement (30, 30') als Rad mit mehreren Ladeaufnahmen (31, 31') entlang radialer Achsen ausgebildet ist.

6. Magnetladevorrichtung (10, 10') nach einem der vorhergehenden Ansprüche, **dadurch gekennzeichnet, dass** die mehreren Magnetaufnahmen (21a, 21b, 21'a, 21'b, 21'c, 21'd) in eine erste Serie von Aufnahmen (21a, 21'a, 21'c), die gemäß einem ersten Winkel (α1) in Bezug auf eine radiale Richtung (R) des Aufnahmekörpers (20) ausgerichtet sind, und eine zweite Serie von Aufnahmen (21b, 21'b, 21'd), die gemäß einem zweiten Winkel (α2) in Bezug auf eine radiale Richtung (R) des Aufnahmekörpers (20) ausgerichtet sind, unterteilt sind.

7. Magnetladevorrichtung (10, 10') nach Anspruch 6, **dadurch gekennzeichnet, dass** die mehreren Magnetaufnahmen (21a, 21b, 21'a, 21'b, 21'c, 21'd) paarweise angeordnet ist, wobei jedes Paar eine Aufnahme der ersten Serie von Aufnahmen (21a, 21'a, 21'c) und eine Aufnahme der zweiten Serie von Aufnahmen (21b, 21'b, 21'd) umfasst

8. Magnetladevorrichtung (10, 10') nach Anspruch 6 oder 7, **dadurch gekennzeichnet, dass** die Aufnahmen der ersten Serie von Aufnahmen (21a, 21'a, 21'c) die gleiche oder eine andere Größe in Bezug auf die Größe der Aufnahmen der zweiten Serie von Aufnahmen (21b, 21'b, 21'd) aufweisen.

9. Magnetladevorrichtung (10, 10') nach einem der vorhergehenden Ansprüche, **dadurch gekennzeichnet, dass** der Aufnahmekörper (20, 20') eine Sperrvorrichtung (24, 24') umfasst, die dazu dient, die Magnete (M, M1, M2) vorübergehend und selektiv in den Magnetaufnahmen (21a, 21b, 21'a, 21'b, 21'c, 21'd) zu halten.

10. Magnetladevorrichtung (10, 10') nach Anspruch 9, **dadurch gekennzeichnet, dass** die Blockiervorrichtung (24, 24') mehrere Membranen (25) umfasst, wobei jede Membran (25) zwischen einer Eingriffsposition, in der mindestens eine der mehreren Magnetaufnahmen (21a, 21b, 21'a, 21'b, 21'c, 21'd) an der Unterseite zumindest teilweise geschlossen ist, und einer Auslassposition, in der die mindestens eine Aufnahme der mehreren Magnetaufnahmen (21a, 21b, 21'a, 21'b, 21'c, 21'd) vollständig von einer Bodenwand (23) des Aufnahmekörpers (20, 20') freiliegend ist, beweglich ist.

11. Vorrichtung (100, 100') zum Einsetzen von Magneten (M, M1, M2) in einen Lamellenstapel (L, L'), umfassend mindestens eine Magnetladevorrichtung (10, 10') gemäß einem der vorhergehenden Ansprüche, eine Einsetzstation (50, 50') zum Einsetzen von Magneten (M, M1, M2) in den Lamellenstapel (L, L'), wobei die Einfügestation (50, 50') von der mindestens einen Magnetladevorrichtung (10, 10') beabstandet ist, und eine Transfervorrichtung (40, 40'), die zwischen der mindestens einen Magnetladevorrichtung (10, 10') und der Einsetzstation (50, 50') verschiebbar ist und so konfiguriert ist, dass sie die Magnete (M, M1, M2) von der mindestens einen Magnetladevorrichtung (10, 10') zur Einsetzstation (50, 50') überträgt.

12. Vorrichtung (100, 100') nach Anspruch 11, **dadurch gekennzeichnet, dass** die Transfervorrichtung (40, 40') ein Lamellenstapelmodell (41, 41') mit mehreren Transferaufnahmen (41a, 41b, 41'a, 41'b, 41'c, 41'd) umfasst, die in der gleichen Weise angeordnet sind wie die mehreren Magnetaufnahmen (21a, 21b, 21'a, 21'b, 21'c, 21'd).

13. Vorrichtung (100') nach Anspruch 11 oder 12, **dadurch gekennzeichnet, dass** sie eine erste Magnetladevorrichtung (10) zum Laden eines Magneten erster Art (M1) und eine zweite Magnetladevorrichtung (10') zum Laden eines Magneten zweiter Art (M2) umfasst, wobei die erste (10) und die zweite (10') Magnetladevorrichtung voneinander und von der Einsetzstation (50') beabstandet sind.

14. Verfahren zum Laden von Magneten in einen Aufnahmekörper (20, 20'), der um eine erste Drehachse (Y1) drehbar ist und mit mehreren Magnetaufnahmeplätzen (21a, 21b, 21'a, 21'b, 21'c, 21'd) ausgestattet ist, die entlang einer Umfangszone des drehbaren Aufnahmekörpers (20, 20') verteilt sind, wobei das Verfahren die folgenden Schritte umfasst: Zuführen mehrerer Magnete (M, M1, M2) in geordneter Folge und einer im Wesentlichen radialen Richtung zu mindestens einem Magnetladeelement (30, 30'), das um eine zweite Drehachse (Y2, Y3) drehbar ist, die parallel zur ersten Drehachse (Y1) verläuft und von dieser beabstandet ist, und umfassend mindestens eine Ladeaufnahme (31, 31'), die so konfiguriert und angeordnet ist, dass sie einen Magneten (M, M1, M2) aufnehmen kann, der dem Ladeelement (30, 30') zugeführt wird; Einsetzen eines Magneten (M, M1, M2) in die mindestens eine Ladeaufnahme (31, 31') in Übereinstimmung mit einer von den mehreren Magnetaufnahmen (21a, 21b, 21'a, 21'b, 21'c, 21'd) entfernten Einlassposition (PI); Drehen des Ladelements (30, 30') um die zweite Drehachse (Y2, Y3), um die mindestens eine Ladeaufnahme (31, 31'), in der der Magnet (M, M1, M2) untergebracht ist, in Richtung einer Ladeposition (PCa, PCb) zu verschieben, in der die mindestens eine Ladeaufnahme (31, 31') eine der Magnetaufnahmeplätzen (21a, 21b, 21'a, 21'b, 21'c, 21'd) des drehbaren Aufnahmekörpers (20, 20') überlappt, sodass der Magnet axial innerhalb der Magnetaufnahmefläche (21a, 21b, 21'a, 21'b, 21'c, 21'd) nach unten freigegeben wird.

15. Verfahren zum Einbringen von Magneten in einen Lamellenstapel (L, L'), umfassend die Schritte des Verfahrens zum Laden von Magneten in einen drehbaren Aufnahmekörper (20, 20') gemäß Anspruch 14 in Bezug auf eine Magnetladevorrichtung (10, 10'); einen Schritt des Freigebens der in dem drehbaren Aufnahmekörper (20, 20') geladenen Magnete (M, M1, M2) in Richtung einer Transfervorrichtung (40, 40'), die ein Lamellenstapelmodell (41, 41') mit mehreren Transfereaufnahmen (41a, 41b, 41'a, 41'b, 41'c, 41'd) umfasst, die in der gleichen Weise wie die mehreren Magnetaufnahmen (21a, 21b, 21'a, 21'b, 21'c, 21'd) angeordnet sind; einen Schritt des Übertragens der Magnete (M, M1, M2) durch Verschieben der Transfervorrichtung (40, 40') von der Magnetladevorrichtung (10, 10') in Richtung einer Magneteinsetzstation (50, 50'); und einen Schritt des Einsetzens der Magnete (M, M1, M2) in den Lamellenstapel (L, L') entsprechend der Einsetzstation (50, 50').

## Revendications

1. Dispositif de chargement d'aimants (10, 10') comprenant un corps de réception (20, 20') apte à tourner autour d'un premier axe de rotation (Y1) et équipé d'une pluralité de logements d'aimant (21a, 21b, 21'a, 21'b, 21'c, 21'd) répartis le long d'une zone périphérique dudit corps de réception (20, 20') et au moins un organe de chargement d'aimant (30, 30') apte à tourner autour d'un second axe de rotation (Y2, Y3) parallèle audit premier axe de rotation (Y1) et comprenant au moins un logement de chargement (31, 31') configuré et disposé pour recevoir au moins partiellement un aimant (M, M1, M2) qui est alimenté à l'organe de chargement d'aimant (30, 30') dans une direction sensiblement radiale, **caractérisé en ce que** le second axe de rotation (Y2, Y3) est espacé dudit premier axe de rotation (Y1) de sorte que ledit au moins un organe de chargement (30, 30') chevauche partiellement une portion de ladite zone périphérique dudit corps de réception (20, 20') et **en ce que** ledit au moins un organe de chargement (30, 30') est configuré pour faire tourner ledit au moins un logement de chargement (31, 31') entre une position d'introduction (PI) pour recevoir un aimant, et une position de chargement (PCa, PCb) pour libérer axialement l'aimant chargé dans l'un de ladite pluralité de logements d'aimant (21a, 21b, 21'a, 21'b, 21'c, 21'd), ledit logement de chargement (31, 31') étant disposé à distance de ladite pluralité de logements d'aimant (21a, 21b, 21'a, 21'b, 21'c, 21'd) lorsqu'il est dans ladite position d'introduction (PI), et chevauchant, vu selon la direction axiale l'un des logements d'aimant (21a, 21b, 21'a, 21'b, 21'c, 21'd) lorsqu'il est dans ladite position de chargement (PCa, PCb).

2. Dispositif de chargement d'aimants (10, 10') selon la revendication 1, **caractérisé en ce que** ledit au moins un organe de chargement (30, 30') est configuré et dimensionné de telle sorte que lorsqu'un logement de chargement (31, 31') est disposé en correspondance avec la position de chargement (PCa, PCb, PCc, PCd), un autre logement de chargement (31, 31') du même organe de chargement (30, 30') est dans la position d'introduction d'aimant (PI) afin de recevoir radialement un aimant (M, M1, M2) qui sera ensuite chargé dans ledit corps de réception (20, 20').

3. Dispositif de chargement d'aimants (10, 10') selon la revendication 2, **caractérisé en ce qu'**au moins deux logements de chargement adjacents (31, 31') dudit organe de chargement (30, 30') sont orientés de telle manière à former un angle (β) entre eux égal à un angle formé entre un axe médian (210a, 210b) du logement d'aimant (21a, 21b, 21'a, 21'b, 21'c, 21'd) qui est situé dans ladite position de chargement (PCa, PCb, PCc, PCd) et un axe médian du logement de chargement (31, 31') qui est situé dans ladite position d'introduction (PI), lesdits axes médians étant disposés perpendiculairement à, et passant par, le même second axe de rotation (Y2, Y3) de l'organe de chargement (30, 30') qui comporte le logement de chargement considéré.

4. Dispositif de chargement d'aimants (10, 10') selon l'une quelconque des revendications précédentes, **caractérisé en ce que** ledit au moins un logement de chargement (31, 31') est configuré comme une cavité ayant une ouverture d'introduction par laquelle l'aimant (M, M1, M2) entre, un fond d'appui opposé à l'ouverture d'introduction et sur lequel l'aimant vient en butée lorsqu'il est alimenté radialement, et deux parois latérales opposées disposées à une distance sensiblement égale à une épaisseur de l'aimant.

5. Dispositif de chargement d'aimants (10, 10') selon l'une quelconque des revendications précédentes, **caractérisé en ce que** ledit organe de chargement (30, 30') est configuré comme une roue comprenant une pluralité de logements de chargement (31, 31') disposés le long de directrices radiales.

6. Dispositif de chargement d'aimants (10, 10') selon l'une quelconque des revendications précédentes, **caractérisé en ce que** ladite pluralité de logements d'aimant (21a, 21b, 21'a, 21'b, 21'c, 21'd) est divisée en une première série de logements (21a, 21'a, 21'c) orientés selon un premier angle (α1) par rapport à une direction radiale (R) dudit corps de réception (20), et une seconde série de logements (21b, 21'b, 21'd) orientés selon un second angle (α2) par rapport à une direction radiale (R) dudit corps de réception (20).

7. Dispositif de chargement d'aimants (10, 10') selon la revendication 6, **caractérisé en ce que** ladite pluralité de logements d'aimant (21a, 21b, 21'a, 21'b, 21'c, 21'd) est organisée en paires, chaque paire comprenant un logement de ladite première série de logements (21a, 21'a, 21'c) et un logement de ladite seconde série de logements (21b, 21'b, 21'd).

8. Dispositif de chargement d'aimants (10, 10') selon la revendication 6 ou 7, **caractérisé en ce que** les logements de ladite première série de logements (21a, 21'a, 21'c) ont la même dimension ou une dimension différente par rapport à la dimension des logements de ladite seconde série de logements (21b, 21'b, 21'd).

9. Dispositif de chargement d'aimants (10, 10') selon l'une quelconque des revendications précédentes, **caractérisé en ce que** ledit corps de réception (20, 20') comprend un dispositif de blocage (24, 24') configuré pour maintenir temporairement et sélectivement les aimants (M, M1, M2) à l'intérieur desdits logements d'aimant (21a, 21b, 21'a, 21'b, 21'c, 21'd).

10. Dispositif de chargement d'aimants (10, 10') selon la revendication 9, **caractérisé en ce que** ledit
dispositif de blocage (24, 24') comprend une pluralité de diaphragmes (25), chaque diaphragme (25) étant mobile entre une position d'engagement dans laquelle au moins un logement de ladite pluralité de logements d'aimant (21a, 21b, 21'a, 21'b, 21'c, 21'd) est au moins partiellement fermé au fond, et une position de désengagement dans laquelle ledit au moins un logement de ladite pluralité de logements d'aimant (21a, 21b, 21'a, 21'b, 21'c, 21'd) est complètement dégagé en correspondance avec une paroi de fond (23) dudit corps de réception (20, 20').

11. Appareil (100, 100') pour insérer des aimants (M, M1, M2) dans un empilement de tôles (L, L'), comprenant au moins un dispositif de chargement d'aimants (10, 10') selon l'une quelconque des revendications précédentes, une station d'insertion (50, 50') pour insérer des aimants (M, M1, M2) dans ledit empilement de tôles (L, L'), ladite station d'insertion (50, 50') étant espacée dudit au moins un dispositif de chargement d'aimants (10, 10'), et un dispositif de transfert (40, 40') déplaçable entre ledit au moins un dispositif de chargement d'aimants (10, 10') et ladite station d'insertion (50, 50'), et configuré pour transférer lesdits aimants (M, M1, M2) dudit au moins un dispositif de chargement d'aimants (10, 10') vers ladite station d'insertion (50, 50').

12. Appareil (100, 100') selon la revendication 11, **caractérisé en ce que** ledit dispositif de transfert (40, 40') comprend un modèle d'empilement de tôles (41, 41') ayant une pluralité de logements de transfert (41a, 41b, 41'a, 41'b, 41'c, 41'd) agencés de la même manière que l'agencement de ladite pluralité de logements d'aimant (21a, 21b, 21'a, 21'b, 21'c, 21'd).

13. Appareil (100') selon la revendication 11 ou 12, **caractérisé en ce qu'**il comprend un premier dispositif de chargement d'aimants (10) configuré pour charger un premier type d'aimant (M1), et un second dispositif de chargement d'aimants (10') configuré pour charger un second type d'aimant (M2), lesquels premier (10) et second (10') dispositifs de chargement d'aimants sont espacés l'un de l'autre et de ladite station d'insertion (50').

14. Procédé de chargement d'aimants dans un corps de réception (20, 20') apte à tourner autour d'un premier axe de rotation (Y1) et équipé d'une pluralité de logements d'aimant (21a, 21b, 21'a, 21'b, 21'c, 21'd) répartis le long d'une zone périphérique dudit corps de réception apte à tourner (20, 20'), comprenant les étapes consistant à alimenter, dans une succession ordonnée, dans une direction sensiblement radiale, une pluralité d'aimants (M, M1, M2) vers au moins un organe de chargement d'aimant (30, 30') apte à tourner autour d'un second axe de rotation (Y2, Y3) parallèle et espacé dudit premier axe de rotation (Y1), et comprenant au moins un logement de chargement (31, 31') configuré et disposé de telle sorte qu'il puisse recevoir au moins partiellement un aimant (M, M1, M2) alimenté audit organe de chargement (30, 30') ; insérer un aimant (M, M1, M2) dans ledit au moins un logement de chargement (31, 31') en correspondance avec une position d'introduction (PI) distante de ladite pluralité de logements d'aimant (21a, 21b, 21'a, 21'b, 21'c, 21'd) ; faire tourner ledit organe de chargement (30, 30') autour dudit second axe de rotation (Y2, Y3) de façon à déplacer ledit au moins un logement de chargement (31, 31'), dans lequel l'aimant (M, M1, M2) est logé, vers une position de chargement (PCa, PCb) dans laquelle ledit au moins un logement de chargement (31, 31') chevauche l'un des logements d'aimant (21a, 21b, 21'a, 21'b, 21'c, 21'd) dudit corps de réception apte à tourner (20, 20'), de sorte que l'aimant est libéré axialement à l'intérieur du logement d'aimant (21a, 21b, 21'a, 21'b, 21'c, 21'd) vers le bas.

15. Procédé d'insertion d'aimants dans un empilement de tôles (L, L'), comprenant les étapes du procédé de chargement d'aimants dans un corps de réception apte à tourner (20, 20') selon la revendication 14 en correspondance avec un dispositif de chargement d'aimants (10, 10') ; une étape de libération des aimants (M, M1, M2) chargés dans ledit corps de réception apte à tourner (20, 20') vers un dispositif de transfert (40, 40') comprenant un modèle d'empilement de tôles (41, 41') comprenant une pluralité de logements de transfert (41a, 41b, 41'a, 41'b, 41'c, 41'd) agencés de la même manière que l'agencement de la pluralité de logements d'aimant (21a, 21b, 21'a, 21'b, 21'c, 21'd) ; une étape de transfert des aimants (M, M1, M2) par déplacement dudit dispositif de transfert (40, 40') depuis ledit dispositif de chargement d'aimants (10, 10') vers une station d'insertion d'aimants (50, 50') ; et une étape d'insertion des aimants (M, M1, M2) dans ledit empilement de tôles (L, L') en correspondance avec ladite station d'insertion (50, 50').
